# EUROPEAN PATENT APPLICATION

(11) **EP 3 904 184 A1**
(43) Date of publication of application: **03.11.2021**
(21) Application number: 20172338.4
(22) Date of filing: 30.04.2020
(51) Int. Cl.: B62D 7/18, B62D 15/02

(54) **PIN**

(71) Applicant: Dana Italia S.r.L., 38062 Arco (IT)
(72) Inventor: Tonini, Daniele, 38067 Ledro (IT); Bavaresco, Federico, 37010 San Zeno di Montagna (IT)
(74) Representative: Pfenning, Meinig & Partner mbB

(57) **Abstract**

The present invention relates to a pin (1) for rotatably connecting a steering knuckle (2) to a transverse steering element (3), a first end (1a) of the pin (1) being adapted to be rigidly coupled to the steering knuckle (2) and a second end (1b) of the pin (1) being configured to be coupled to the transverse steering element (3) through formation of a spherical joint (4) with the transverse steering element (3). The pin is further characterized in that, in a region of the spherical joint (4), the pin (1) contains a double universal joint axis (5) which at its first (5a) end is rigidly coupled to the pin (1) and at its second end (5b) is configured to be coupled to a steering sensor (6), and which is adapted to transfer a steering angle to the steering sensor (6).

## Description

The present invention relates to a pin for connecting a steering knuckle to a transverse steering element, in particular to a pin for connecting a steering knuckle to a transverse steering element in a single-wheel suspension. The pin according to the invention is particularly used in single-wheel suspensions of agricultural and industrial vehicles.

Axes of agricultural vehicles are normally equipped with a steering angular sensor to obtain information on a steering angle and to provide the information on the steering angle in order to manage a vehicle tracking system device. In a steering rigid axle the steering sensor simply measures the rotation of the upper king pin through a rigid guide connected with the fixed component and the sensor. In a rigid axle the steering knuckle can only rotate around the pivot with respect to the rigid component.

In a single-wheel suspended axle (in the following alternatively denoted by independent suspended axle) the movement of the steering knuckle with respect to the upper transverse steering element is much more complex. The movement depends not only on the steering angle, but also on the vertical movement of the wheel. Consequently, the movement in an independent suspended axle is constrained by a spherical joint. The steering sensor that is connected on the spherical joint has to discriminate only the steering angle, independently of the vertical movement of the wheel.

The problem to be solved by the present invention is to provide a pin for connecting a steering knuckle to a transverse steering element in a single wheel suspension which enables to accurately detect the steering angle during movement of the wheel using a simple steering sensor.

The problem is solved by the pin according to claim 1. Advantageous embodiments are described with respect to the dependent claims.

The pin according to the invention is configured to rotatably connect a steering knuckle to a transverse steering element, a first end of the pin being adapted to be rigidly coupled to the steering knuckle and a second end of the pin being configured to be coupled to the transverse steering element through formation of a spherical joint with the transverse steering element. The pin is, in particular, characterized in that in a region of the spherical joint, the pin contains a double universal joint axis which at its first end is rigidly coupled to the pin and at its second end is configured to be coupled to a steering sensor, and which is adapted to transfer a steering angle to the steering sensor.

Due to connecting the rigid part of the pin and the steering sensor within the spherical joint by the double universal joint axis, the steering movement of the steering knuckle can be transferred via the double universal joint axis to the steering sensor independently of the vertical movement of the steering knuckle.

According to an advantageous embodiment the double universal joint axis can comprise two universal joints, which are connected to each other by a shaft, and a first extremity connecting the double universal joint axis with the pin and a second extremity which is adapted to connect the double universal joint axis with the steering sensor. A length of the double universal joint axis, in particular a length of the shaft, can be provided according to a size and/or a configuration of an axle of a vehicle.

According to a further advantageous embodiment the double universal joint axis can have a variable shaft length, in particular a telescopic shaft, in order to compensate for deformations due to temperature changes and/or aging processes and/or for mounting deviations.

According to a further advantageous embodiment the spherical joint can be a ball-and-socket joint, wherein a ball of the ball-and-socket joint is formed by the second end of the pin and a socket of the ball-and-socket joint is formed by the transverse steering element. Moreover, the ball can have a hollow cylindrical cavity whose cylinder axis coincides with a longitudinal axis of the pin and which can accommodate the double universal joint axis and in which the double universal joint axis can rotate freely upon rotation of the pin.

The exact position of the double universal joint axis can be provided according to a size and/or a configuration of the axle of a vehicle.

According to a further advantageous embodiment the double universal joint axis can be disposed within the ball such that the joint system formed by the spherical joint and the double universal joint axis is homokinetic. In particular, a center of the double universal joint axis can be disposed in a center of the ball and/or the first and second extremities of the double universal joint axis can extend outside the ball.

In such a homokinetic configuration, the rotation angle of the pin is at any time basically equal to the angle of the steering sensor, and it does not generate an error on the steering angle acquired by the steering sensor.

The invention further includes a single-wheel suspension, in particular of a front axle, comprising a steering knuckle, a transverse steering element, a steering sensor and a pin as described above.

According to an advantageous embodiment of the single-wheel suspension, the steering sensor can be mounted in a region of the transverse steering element which is intersected by the longitudinal axis of the pin.

According to a further advantageous embodiment of the single-wheel suspension, the steering sensor can comprise a rigid part which is rigidly connected to the transverse steering element and a rotatable part which is rigidly connected to the double universal joint axis.

According to a further advantageous embodiment the single-wheel suspension can further comprise a wheel hub being connected to the steering knuckle, wherein the steering sensor can be adapted to detect a steering angle of a wheel carried by the wheel hub.

The present invention further includes a vehicle, in particular an agricultural or industrial vehicle, comprising the above described single-wheel suspension.

In the following, some preferred embodiments of the pin as well as of the single-wheel suspension according to the present invention are described in more detail on the basis of the following figures. The described features are not only conceivable in the combinations of the disclosed embodiments, but can be realized independently of the concrete embodiments in various other combinations.
- Figure 1: shows a single-wheel suspension including a pin according to a first embodiment in a partially sectional view,
- Figure 2: shows a spherical joint with the pin of figure 1 in an enlarged sectional view,
- Figure 3: shows a single-wheel suspension including a pin according to a second embodiment in a partially sectional view, and
- Figure 4: shows a spherical joint with the pin of figure 3 in an enlarged sectional view.

The following reference signs are used in the figures:
- 1: upper kingpin
- 1a: first end of the upper kingpin
- 1b: second end of the upper kingpin
- 2: steering knuckle
- 3: upper transverse steering element
- 4: spherical joint
- 4a: ball
- 4b: socket
- 5: double universal joint axis
- 5a: first end of the double universal joint axis
- 5b: second end of the double universal joint axis
- 5d: first universal joint
- 5c: second universal joint
- 5e: shaft
- 5g: first extremity
- 5f: second extremity
- 6: steering sensor
- 7: cavity
- 8: wheel hub
- 9: wheel axis
- 10: lower kingpin
- 20: drive shaft
- 30: lower transverse steering element
- 40: steering pivot axis
- 100: single-wheel suspension

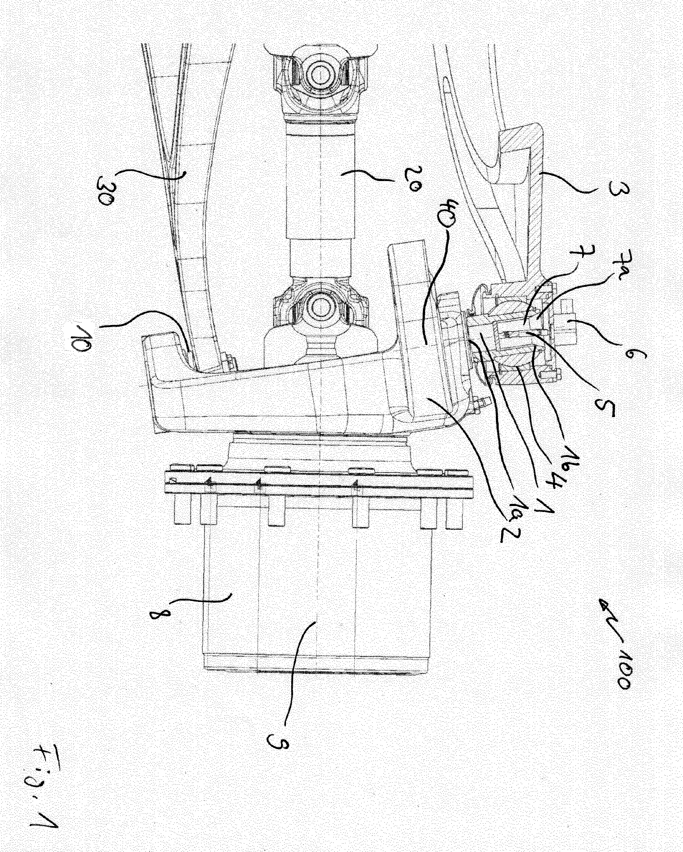

Figure 1 shows a single-wheel suspension 100 of a front right axle according to a first embodiment of the present invention in a partially sectional view. The single-wheel suspension 100 comprises a steering knuckle 2 which carries a rotatable wheel hub 8 on an outside of the steering knuckle 2 facing away from a vehicle to which the wheel suspension 100 can be mounted. The wheel hub 8 of the front right wheel suspension 100 can receive a wheel (not shown in the figures). The wheel hub 8 is connected to a vehicle transmission (not shown in the figures) via the drive shaft 20. The drive shaft 20 is load-carrying connected to the wheel hub 8 through an opening (not shown in the figures) in the steering knuckle 2 and extends opposite the wheel hub 8 to an inside of the vehicle to which the wheel suspension 100 can be mounted. The drive shaft 20 is adapted to rotate the wheel hub 8 around the wheel axis 9.

The single-wheel suspension 100 further comprises an upper 3 and a lower 30 transverse steering element which are configured to connect the wheel suspension 100 to a vehicle and to support the structural loads. The upper and lower transverse steering elements 3, 30 extend basically transversely to the steering knuckle 2 on a side facing the vehicle. The upper transverse steering element 3 is rotatably connected to the steering knuckle 2 via an upper pin 1 (also referred to as upper kingpin). The lower transverse steering element 30 is rotatably connected to the steering knuckle 2 via a lower pin 10 (also referred to as lower kingpin). The upper kingpin 1 and the upper transverse steering element 3 form an upper spherical joint 4 with each other. The lower kingpin 10 and the lower transverse steering element 30 form a lower spherical joint (not shown) with each other. The longitudinal axes of the upper kingpin 1 and the lower kingpin 10 form a rotational steering pivot axis 40 of the steering knuckle 2 around the upper and lower transverse steering elements 3, 30. In addition, the upper 4 and lower spherical joints enable, inter alia, a vertical movement of the wheel hub 8, which is basically a rotation of the wheel hub 8 around a horizontal axis transversely to the transverse steering elements 3, 30. This vertical movement of the wheel hub 8 can, for instance, compensate for unevenness of a road.

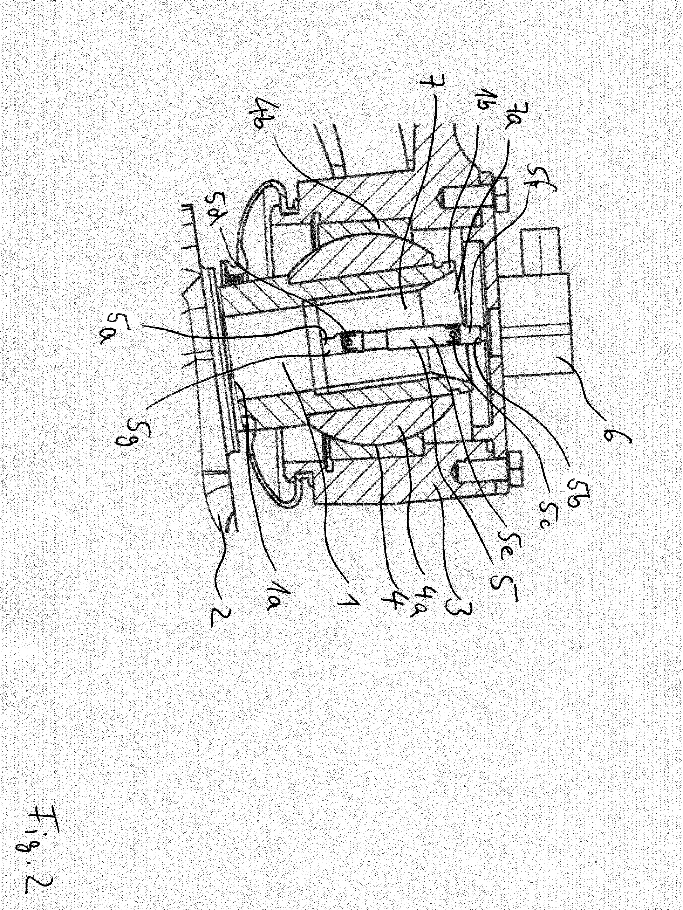

Figure 2 shows a more detailed sectional view of the upper spherical joint 4 comprising the kingpin 1 according to the first embodiment. The kingpin 1 is at its lower first end 1a rigidly connected to the steering knuckle 2. On its upper second end 1b, the kingpin 1 forms the spherical joint 4 together with the transverse steering element 3. The spherical joint 4 is a ball-and-socket joint, wherein the second end 1b of the kingpin 1 is formed as a ball 4a and the socket 4b is formed by an inner ring of the transverse steering element 3. Within the ball 4a the kingpin 1 has a hollow cylindrical cavity 7 with an opening 7a on an upper side of the ball 4a.

Within the cavity 7 a double universal joint axis 5 is disposed basically along a vertical direction. The double universal joint axis 5 comprises a first universal joint 5d and a second universal joint 5c. The first and second universal joints 5d and 5c are connected with each other by a shaft 5e. Opposite the shaft 5e, the first universal joint 5d is connected with a first extremity 5g of the double universal joint axis 5 forming a first end 5a of the double universal joint axis 5. The double universal joint axis 5 is rigidly connected to the kingpin 1 at its first end 5a. Opposite the shaft 5e, the second universal joint 5c is connected with a second extremity 5f of the double universal joint axis 5 forming a second end 5b of the double universal joint axis 5. The double universal joint axis 5 is, at its second end 5b, rotatably connected to a steering sensor 6. The steering sensor 6 is mounted on top of the upper transverse steering element 3 in a region, which is intersected by the steering pivot axis 40.

Thus, in this configuration, the double universal joint axis 5 can transfer the steering angle of the wheel hub 8 around the steering pivot axis 40 from the upper kingpin 1 to the steering sensor 6 in order to measure the steering angle of the wheel hub 8 with respect to the steering pivot axis 40. The second extremity 5f acts as an input element which transmits the steering angle to the steering sensor 6. The two universal joints 5d and 5c thereby decouple the steering movement from the vertical movement of the wheel hub 8 and transfer only the steering angle of the steering movement to the steering sensor 6 independently of the vertical movement of the wheel while rotating freely within the cavity 7 with respect to the steering pivot axis 40. Moreover, at the upper side of the ball 4a, the opening 7a of the cavity 7 is conically widened in order to provide enough space for the rotation and/or movement of the double universal joint axis 5 in case of greater vertical movement of the wheel hub 8. In addition, the shaft 5e has a telescopic function in order to compensate for deformations due to temperature changes and/or aging processes and/or for mounting deviations.

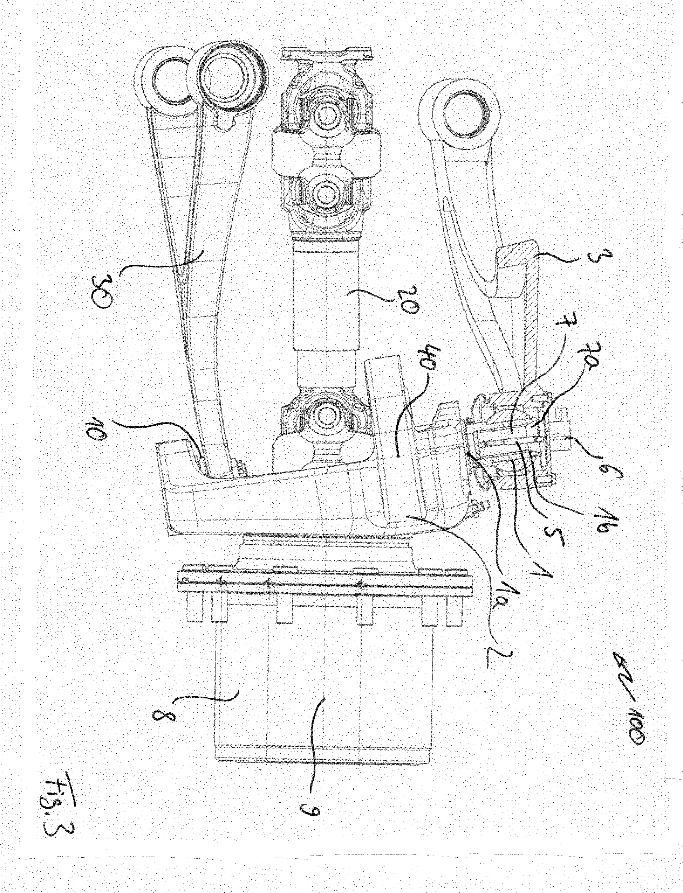

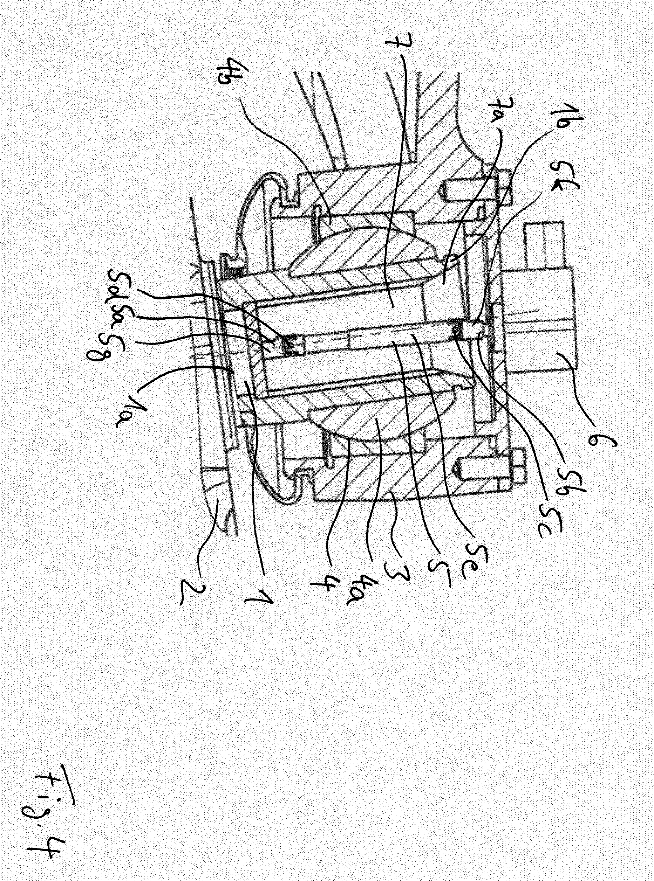

Figure 3 shows a single-wheel suspension 100 of a front right axle according to a second embodiment of the present invention in a partially sectional view. Figure 4 shows a more detailed sectional view of the upper spherical joint 4 comprising the kingpin 1 according to the second embodiment. The second embodiment is similar to the first embodiment of figures 1 and 2. However, the second embodiment differs from the first embodiment in the implementation of the double universal joint axis 5. Here the double universal joint axis 5 is disposed within the ball 4a such that a center of the double universal joint axis, i.e. a center point of the distance between the first and second universal joints 5d and 5c, is disposed in a center of the ball 4a and the extremities 5f and 5g extend outside the ball 4a. This configuration of the double universal joint axis 5 renders the joint system of spherical joint 4 and double universal joint axis 5 homokinetic. This means that an angular velocity of the steering movement remains constant when transferred from the kingpin 1 to the steering sensor 6 via the double universal joint axis 5. This again means that, at any time, the steering angle measured with the steering sensor 6 is equal to the rotation angle of the kingpin 1 with respect to the steering pivot axis 40. Thus, the steering angle can be accurately measured by the steering sensor 6 without generation of an error in the steering angle due to differing angular velocities of the kingpin 1 and the individual parts of the double universal joint axis 5.

## Claims

1. Pin (1) for rotatably connecting a steering knuckle (2) to a transverse steering element (3), a first end (1a) of the pin (1) being adapted to be rigidly coupled to the steering knuckle (2) and a second end (1b) of the pin (1) being configured to be coupled to the transverse steering element (3) through formation of a spherical joint (4) with the transverse steering element (3),
**characterized in that**, in a region of the spherical joint (4), the pin (1) contains a double universal joint axis (5) which at its first (5a) end is rigidly coupled to the pin (1) and at its second end (5b) is configured to be coupled to a steering sensor (6), and which is adapted to transfer a steering angle to the steering sensor (6).

2. Pin (1) according to the preceding claim, wherein the double universal joint axis (5) comprises two universal joints (5c, 5d), which are connected to each other by a shaft (5e), and a first extremity (5f) connecting the double universal joint axis (5) with the pin (1) and a second extremity (5g) which is adapted to connect the double universal joint axis (5) with the steering sensor (6).

3. Pin (1) according to one of the preceding claims, wherein the double universal joint axis (5) has a variable shaft length, in particular a telescopic shaft, in order to compensate for deformations due to temperature changes and/or aging processes and/or for mounting deviations.

4. Pin (1) according to one of the preceding claims, wherein the spherical joint (4) is a ball-and-socket joint, wherein a ball (4a) of the ball-and-socket joint is formed by the second end (1b) of the pin (1) and a socket (4b) of the ball-and-socket joint is formed by the transverse steering element (3).

5. Pin (1) according to the preceding claim, wherein the ball (4a) has a hollow cylindrical cavity (7) whose cylinder axis coincides with a longitudinal axis of the pin (1) and which accommodates the double universal joint axis (5) and in which the double universal joint axis (5) can rotate freely upon rotation of the pin (1).

6. Pin (1) according to one of the two preceding claims, wherein the double universal joint axis (5) is disposed within the ball (4a) such that a joint system formed by the spherical joint (4) and the double universal joint axis (5) is homokinetic.

7. Pin (1) according to one of the three preceding claims, wherein a center of the double universal joint axis (5) is disposed in a center of the ball (4a) and/or the first and second extremities (5f, 5g) of the double universal joint axis (5) extend outside the ball (4a).

8. Single-wheel suspension (100), in particular of a front axle, comprising a steering knuckle (2), a transverse steering element (3), a steering sensor (6) and a pin (1) according to one of the preceding claims.

9. Single-wheel suspension (100) according to the preceding claim, wherein the steering sensor (6) is mounted in a region of the transverse steering element (3) which is intersected by the longitudinal axis of the pin (1).

10. Single-wheel suspension (100) according to one of the two preceding claims, wherein the steering sensor (6) comprises a rigid part which is rigidly connected to the transverse steering element (3) and a rotatable part which is rigidly connected to the double universal joint axis (5).

11. Single-wheel suspension (100) according to one of the three preceding claims further comprising a wheel hub (8) being connected to the steering knuckle (2), wherein the steering sensor (6) is adapted to detect a steering angle of a wheel carried by the wheel hub (8).

12. Vehicle, in particular, an agricultural or industrial vehicle, comprising the single-wheel suspension (100) according to the preceding claim.
